(19) Europäisches Patentamt / European Patent Office / Office européen des brevets

(11) **EP 3 222 705 B1**

(12) **EUROPEAN PATENT SPECIFICATION**

(45) Date of publication and mention of the grant of the patent:
**12.01.2022  Bulletin 2022/02**

(21) Application number: **15860072.6**

(22) Date of filing: **12.11.2015**

(51) Int Cl.:
*C12C 7/00* *(2006.01)*      *A23L 2/00* *(2006.01)*
*C12G 3/02* *(2019.01)*      *C12G 3/04* *(2019.01)*
*C12C 3/08* *(2006.01)*      *C12C 7/24* *(2006.01)*
*C12C 11/00* *(2006.01)*      *C12C 12/00* *(2006.01)*
*C12C 3/00* *(2006.01)*

(86) International application number:
**PCT/JP2015/081889**

(87) International publication number:
**WO 2016/080282 (26.05.2016 Gazette 2016/21)**

(54) **METHOD FOR PRODUCING BEER-TASTING BEVERAGE, AND METHOD FOR IMPARTING HOP AROMA TO BEER-TASTING BEVERAGE**

VERFAHREN ZUR HERSTELLUNG EINES GETRÄNKS MIT BIERGESCHMACK UND VERFAHREN, UM DEM GETRÄNK MIT BIERGESCHMACK EIN HOPFENAROMA ZU VERLEIHEN

PROCÉDÉ DE PRODUCTION D'UNE BOISSON AU GOÛT DE BIÈRE, ET PROCÉDÉ PERMETTANT DE CONFÉRER UN ARÔME DE HOUBLON À UNE BOISSON AU GOÛT DE BIÈRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.11.2014  JP 2014234758**
          **22.06.2015  PCT/JP2015/067873**

(43) Date of publication of application:
**27.09.2017  Bulletin 2017/39**

(73) Proprietors:
• **Asahi Breweries, Ltd.**
  **Sumida-ku**
  **Tokyo 130-8602 (JP)**
• **Asahi Group Holdings, Ltd.**
  **Tokyo 130-8602 (JP)**

(72) Inventors:
• **ITO, Shinsuke**
  **Moriya-shi**
  **Ibaraki 302-0106 (JP)**
• **KISHIMOTO, Toru**
  **Moriya-shi**
  **Ibaraki 302-0106 (JP)**

(74) Representative: **Eisenführ Speiser**
**Patentanwälte Rechtsanwälte PartGmbB**
**Postfach 10 60 78**
**28060 Bremen (DE)**

(56) References cited:
**GB-A- 2 020 693**      **JP-A- 2010 178 628**
**JP-A- 2010 178 628**      **JP-A- 2010 539 892**
**JP-A- 2011 244 719**      **JP-A- 2013 051 913**
**JP-A- 2013 132 272**      **JP-A- 2013 132 274**
**JP-A- 2014 128 241**      **US-A- 3 364 033**
**US-A1- 2010 323 060**

• **KISHIMOTO, T. ET AL.: 'COMPARISON OF 4-MERCAPTO- 4-METHYLPENTAN-2-ONE CONTENTS IN HOP CULTIVARS FROM DIFFERENT GROWING REGIONS' vol. 56, no. 3, 01 February 2008, pages 1051 - 1057, XP055377627 DOI: 10.1021/JF072173E**
• **None**

## Description

### Technical Field

The present invention relates to a method for producing a beer-taste beverage, a method for imparting hop aroma to beer-taste beverage and a beer-taste beverage producing apparatus.

### Background Art

Hops impart refreshing bitterness and aroma to beer-taste beverages. Bitterness and aroma derived from hops have a large influence on the formation of the characters of beer-taste beverages. The intensities of bitterness and aroma can be controlled depending on how to use hops. Hops are normally added during the boiling of a raw material juice such as wort. Such approach is generally called "kettle hopping" and aims to impart bitterness. Meanwhile, to emphasize aroma of hops, an approach called "late hopping" is also known. In the late hopping, hops are added, immediately before the completion of boiling a raw material juice, or while the raw material juice is left to stand in a whirlpool tank, so as to apply as little heat as possible to the hops. To further emphasize the hop aroma, there is also an approach called "dry hopping." In the dry hopping, hops are added to a low-temperature green beer during fermentation ("JOUZOU-BUTU NO SEIBUN (components of a distillate)" (published by the Brewing Society of Japan on December 10, 1999), pp. 259 to 261).

Japanese Patent Application Publication No. 2009-77730 discloses an approach including: boiling hops together with a solvent; adding a hop-processed liquid product thus obtained to a raw material juice; and boiling a mixture of the raw material juice and the hop-processed liquid product, so as to reduce or remove hop aroma components.

Meanwhile, Japanese Patent Application Publication No. 2010-178628 describes an approach including: boiling hop pellets or a hop extract together with an aqueous solvent; and adding a hop solution after the boiling to a raw-material-boiled liquid product after cooling. Further, Published Japanese Translation of PCT International Application No. 2010-539892 discloses a flavor recovery method in a beer brewing including causing vapor, which flows out of wort during a boiling stage, to flow into a rectifying tower, followed by rectification in the rectifying tower, wherein a flavor-containing distillate is supplied to the wort after the boiling stage.

### Summary of Invention

However, according to the conventional approaches, it is difficult to efficiently obtain both bitter substances and aroma substances from hops. $\alpha$ acids, which are bitter components of hops, are isomerized by heating, and are thus solubilized. Accordingly, the boiling allows the bitter components of hops to be taken into a beverage. However, aroma components (for example, linalool, geraniol, citronellol, myrcene, $\beta$-ionone, $\alpha$-eudesmol, and 4-mercapto-4-methylpentan-2-one) of hops are evaporated by boiling, and thus do not remain in the liquid. Attempt to utilize the aroma components makes less sufficient heat to be applied, so that the solubilization of the bitter components becomes slow to proceed.

In addition, the method described in Japanese Patent Application Publication No. 2009-77730 is a method for reducing or removing hop aroma components, and there is no description on how to efficiently allow aroma components of hops to be contained in beverages.

In the method described in Japanese Patent Application Publication No. 2010-178628, hop pellets or a hop extract are boiled together with an aqueous solvent, and a liquid phase is added as a hop solution to a raw material juice. Since aroma components contained in hops are evaporated, aroma components are not added to the raw material juice. In addition, if a hop solution is added to a raw material juice after cooling, the hops are not dissolved or suspended in the raw material juice, so that the device is likely to be contaminated by sediments of hops. Further, when filtration is conducted in a post process, a filter is sometimes clogged by sediments of hops. In addition, if a hop solution is added to a raw material juice after cooling, grassy aroma components derived from hop-derived low-polarity resins are likely to be imparted to a final beverage.

In the method described in Published Japanese Translation of PCT International Application No. 2010-539892, a vapor flowing out of wort during the boiling stage is rectified in the rectifying tower to recover flavors. However, a large number of components are contained in the vapor generated by boiling wort; accordingly, a complicated device is required to obtain a desired flavor-containing distillate from such vapor.

Document US 3, 364, 033 A deals with a method of preparing hop extracts.

Document GB 2 020 693 A describes a method for the improvement of the yield from hops in brewing beer.

Therefore, an object of the present invention is to provide a method for producing a beer-taste beverage, and a method for imparting hop aroma to beer-tasting, which efficiently allow both bitter components and aroma components of hops to be contained in a beverage in a simple manner.

The present inventors have earnestly conducted studies to solve the above-described problems, and consequently found that the above-described problems can be solved by boiling hops together with an aqueous solvent, separately from a raw material juice, recovering each of a hop suspension and a hop evaporated component, and adding these to the juice. This findings have led the inventors to complete the present invention.

Specifically, the present invention includes the matters as specified and defined in the claims.

According to the present invention, it is possible to provide a method for producing a beer-taste beverage, and a method for imparting hop aroma to beer-taste beverage which allow both of bitter components and aroma components of hops to be efficiently contained in a simple manner.

Brief Description of Drawings

Fig. 1 is a schematic diagram showing a beer-taste beverage producing apparatus.

Fig. 2 is a graph showing a concentration ratio between linalool and geraniol for each fraction.

Fig. 3 is a graph showing a concentration ratio between 4MMP and geraniol for each fraction.

Fig. 4 is a graph showing a concentration ratio between myrcene and geraniol for each fraction.

Fig. 5 is a graph showing a relation between each fraction and a concentration of each aroma component.

Fig. 6 is a graph showing a concentration ratio of linalool/geraniol.

Fig. 7 is a graph showing a concentration ratio of myrcene/geraniol.

Fig. 8 is a diagram schematically showing a configuration of a recovery device in Second Embodiment.

Fig. 9 is a diagram conceptually showing components contained in an essential oil of hops, and ratio of these components.

Fig. 10 is a schematic diagram showing an experiment device.

Fig. 11 is a diagram showing a result of measurement of component concentrations.

Description of Embodiments

Throughout the Specification, the term "beer-taste beverage" means any alcohol beverages and non-alcohol beverages having effervescence attributable to carbon dioxide gas and having the same or similar aromas as or to those of beers, regardless of the classification under the Liquor Tax Law as well as used ingredients and the amounts of usage thereof. Accordingly, the term beer-taste beverage is used with the intention to cover not only beers and happoshu (or low-malt beers), which are currently specified in the Liquor Tax Law and related laws, but also so-called third beers and non-alcohol beer-taste beverages.

A method for producing a beer-taste beverage according to the present invention comprises: boiling a raw material juice; cooling the boiled juice; heating at 70°C or more a hop suspension which is a mixture of hops and an aqueous solvent and recovering vapor as hop evaporated components; adding the heated hop suspension to the juice before the cooling; adding the recovered hop evaporated components to the juice, after completion of boiling, and preferably after the cooling. According to such a method, bitter components of hops are solubilized by the boiling, and are added as a hop suspension to the juice, which is a main liquid. On the other hand, aroma components of hops are recovered as hop evaporated components and then added to the main liquid (juice). Therefore, both bitter components and aroma components of hops can be efficiently added to the juice.

Hereinafter, embodiments of the present invention will be described in detail.

(First Embodiment)

1. Apparatus for Producing Beer-taste Beverage

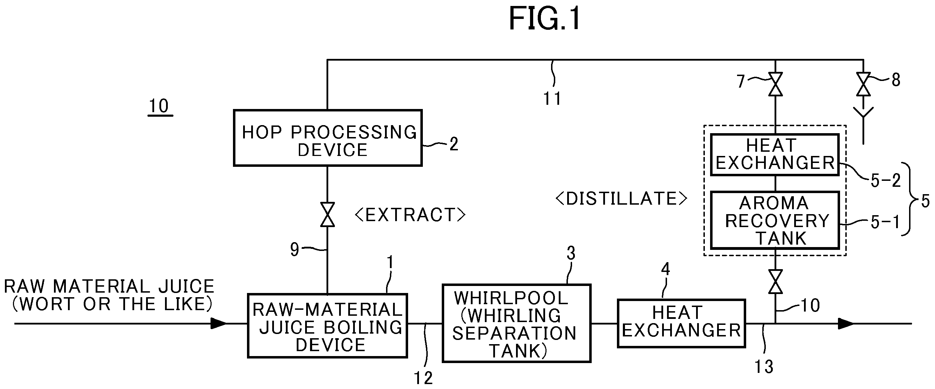

First, a beer-taste beverage producing apparatus 10 which is used for implementing the present invention will be described. Fig. 1 is a schematic diagram showing an example of the beer-taste beverage producing apparatus 10. The beer-taste beverage producing apparatus 10 comprises: a raw-material juice boiling device 1; a hop processing device 2; a whirlpool 3 (whirling separation tank); a heat exchanger 4 (juice cooling device); a recovery device 5; a hop suspension charging line 9; and an evaporated component charging line 10.

The raw-material juice boiling device 1 is a device (boiling pot) which boils a raw material juice. The whirlpool 3 is a device which subjects the juice after the boiling to solid-liquid separation. The whirlpool 3 is connected to the raw-material juice boiling device 1 through a line 12. In addition, a line 13 is connected to the whirlpool 3. The juice subjected to the solid-liquid separation in the whirlpool 3 is taken out through the line 13. The line 13 is provided with the heat exchanger 4. The juice taken out of the whirlpool 3 is cooled by the heat exchanger 4. As the heat exchanger 4, a plate cooler or the like is used. The juice cooled by the heat exchanger 4 is sent to a subsequent step through the line 13.

The hop processing device 2 is a device which boils a hop suspension which is a mixture of hops and an aqueous solvent. The hop processing device 2 is connected to the raw-material juice boiling device 1 through a hop suspension charging line 9. The boiled hop suspension is added to the raw-material juice boiling device 1 through the hop suspension charging line 9. Note that the hop suspension may be added to the juice at any stage as long as it is before the juice is cooled by the heat exchanger 4. In other words, the hop suspension charging line 9 does not necessarily have to be connected to the raw-material juice boiling device 1. For example, the hop suspension charging line 9 may be connected to the whirlpool 3.

The recovery device 5 is provided for recovering vapor generated in the hop processing device 2 as hop evaporated components. The recovery device 5 is connected to the hop processing device 2 through a line 11. In addition, a recovery valve 7 is provided between the line 11 and the recovery device 5. The line 11 is further provided with a discharge valve 8. It is possible to recover the hop evaporated components at a desired timing by operating the recovery valve 7 and the discharge valve 8.

The recovery device 5 is provided with an aroma recovery tank 5-1 and a heat exchanger 5-2. In the recovery device 5, the hop evaporated components is cooled by the heat exchanger 5-2, and is recovered into the aroma recovery tank 5-1 as a condensate (hop distillate).

The aroma recovery tank 5-1 is connected to the line 13 through the evaporated component charging line 10. The condensate recovered into the aroma recovery tank 5-1 is charged into the juice, at a position downstream of the raw-material juice boiling device 1, and more preferably downstream of the heat exchanger 4, through the evaporated component charging line 10. Note that the condensate may be added to the juice at any stage as long as it is after the raw-material juice boiling device 1, and does not necessarily have to be connected to the line 13.

2. Method for producing a beer-taste beverage

Next, a method for producing a beer-taste beverage will be described in detail.

2-1: Boiling of Raw Material Juice

First, a raw material juice is prepared, and is charged into the raw-material juice boiling device 1, followed by boiling. The boiling time is not particularly limited, and any boiling time normally used in the production of an effervescent beverage may be employed.

The raw material juice is an aqueous solution containing sugars such as monosaccharides, disaccharides, and tri- or higher-saccharides. The raw material juice can be obtained, for example, by hydrolyzing a grain containing a starchy material. As the grain containing a starchy material, malt and an extract thereof are preferably used. However, other materials such as rice and corn starch can be used other than malt.

On the other hand, the raw material juice can be prepared by adding a vegetable protein hydrolysate (soy protein hydrolysate, pea protein hydrolysate, or the like) together with sugars to water.

In the embodiment, however, the raw material juice is preferably wort.

2-2: Solid-liquid Separation

The juice after the boiling is sent to the whirlpool 3. In the whirlpool 3, the juice after the boiling is held at a high temperature (for example, 70°C or more) to be subjected to solid-liquid separation. In other words, thermal coagulate generated during the boiling is precipitated and removed from the juice after the boiling.

2-3: Cooling

After the solid-liquid separation, the juice is taken out of the whirlpool 3 through the line 13, and is cooled to an appropriate temperature by the heat exchanger 4. The juice thus cooled goes through necessary post steps, and is shipped as a product.

For example, when the beer-taste beverage is a fermented beverage, yeast is inoculated to the juice after the cooling and fermented. Subsequently, the obtained fermented liquid is matured, followed by filtration to remove yeast, proteins, and the like. In this way, a fermented beverage is obtained as the target beer-taste beverage. Note that the amount of alcohols to be generated can be reduced by suppressing the alcohol fermentation during the fermentation, so that a non-alcohol beer or a low-alcohol beverage having an alcohol concentration of less than 1% by volume can be produced.

On the other hand, if carbon dioxide gas is directly press-introduced into the juice instead of performing the fermentation step, an unfermented beer-taste beverage can be produced as well.

2-4: Boiling of Hops

In the present invention, the hop suspension is heated and boiled by the hop processing device 2 separately from the boiling of the raw material juice. This hop suspension does not contain malt-derived components. The boiling isomerizes and solubilizes α acids, which are bitter components in hops, are isomerized and solubilized. As a result, the bitter components are extracted in the hop suspension. On the other hand, aroma components in hops are evaporated. The vapor of the hop suspension is taken into the recovery device 5 as hop evaporated components through the line 11. The hop evaporated components thus taken in are cooled to become a liquid by the heat exchanger 5-2, and are recovered as a condensate (hop distillate) into the aroma recovery tank 5-1.

The vapor of the hop suspension may be recovered entirely or only part thereof may be recovered selectively. Hops contain, as aroma components, a plurality of components such as, for example, linalool, geraniol, citronellol, myrcene, β-ionone, α-eudesmol, 4-mercapto-4-methylpentan-2-one, and the like. Each of the aroma components imparts a different taste. According to the findings and knowledge of the present inventors, the concentration of each aroma component in vapor of a hop suspension varies with time after the start of heating. In view of this, adjusting the recovery timing makes it possible to obtain hop evaporated components having desired compositions, that is, hop evaporated components having desired aromas. In addition, if the vapor is recovered separately at different timings, it is possible to separately obtain hop evaporated components having different aromas, by using the same hop raw material.

The recovery of vapor may be conducted at a predetermined timing. For example, if the characteristic of a fragrant, floral aroma is desired to be emphasized, the vapor is preferably recovered when the ratio of linalool (ppb) /geraniol (ppb) in the vapor is 3.2 or more. Meanwhile, if the characteristic of a rose-like aroma is desired to be emphasized, the vapor is preferably recovered when the ratio of linalool (ppb)/geraniol (ppb) in the vapor is less than 3.2. Further, if the characteristic of a fruity aroma is desired to be emphasized, the vapor is preferably recovered when the ratio of 4-mercapto-4-methylpentan-2-one (ppb)/geraniol (ppb) in the vapor is 0.0008 or more. In addition, the vapor is preferably recovered when the ratio of myrcene (ppb)/geraniol (ppb) is 0.3 or less, and preferably 0.1 or less. Myrcene is a component having an unpleasant grassiness, and such an unpleasant grassiness can be sufficiently reduced by setting the ratio of myrcene/geraniol to be 0.3 or less.

The heating intensity has no problem as long as the heating intensity is at a level that allows an aqueous solvent to be evaporated, and the upper limit of the heating intensity is not limited. When a value obtained by dividing the weight (integrated value) of the evaporated hop suspension by the weight of hops added is defined as an evaporation coefficient, the timing to recover the vapor is, for example, when the evaporation coefficient is 2.0 or less, more preferably 0.9 or less, and further preferably 0.7 or less; however, the timing is not limited to these.

The hop suspension is preferably heated at 70°C or more from the viewpoint of the isomerization of α acids. Table 1 given below is a graph showing results of measurement of isomerization rates when hops were boiled at each temperature for 60 minutes. As shown in Table 1, when hopes were heated at 70°C or higher, values of 10% or more were obtained as the isomerization rates, so that it can be understood that a sufficient isomerization rate can be achieved.

[Table 1]

| Temperature (°C) | 30 | 40 | 50 | 60 | 70 | 80 | 90 | 100 |
|---|---|---|---|---|---|---|---|---|
| Isomerization Rate (%) | 8.1 | 8.1 | 8.6 | 8.5 | 13.4 | 27.5 | 53.2 | 74.5 |

The aqueous solvent used for the hop suspension is not particularly limited as long as the aqueous solvent is a solvent containing water as a main component. For example, as the aqueous solvent, the same juice as the raw material juice (for example, wort) , and water containing liquid sugars, and the like may be used. In addition, an additive may be added to the aqueous solvent. The additive includes, for example, pH modifiers such as acids, alkalis, and salts, emulsifiers, stabilizers, antioxidants, grains, fruits, herbs, spices, and the like.

However, as the aqueous solvent, water mixed with no other components is preferably used. Using water mixed with no other components as the aqueous solvent makes it possible to prevent components derived from components other than hops from being mixed in the hop vapor components.

The amount of the aqueous solvent (the amount before boiling) relative to hops is preferably 1 to 500 L per kg of hops, and may be, for example, 12 L to 115 L. In addition, in the case where hops are in the form of extract or cones, the amount of the aqueous solvent is preferably (1 L) to (500 L) per kg of hops. On the other hand, in the case where hops are in the form of pellets, the amount of the aqueous solvent is preferably (25 L) to (500 L) per kg of hops.

The amount of the aqueous solvent (the amount before boiling) is preferably approximately 1/10 to 1/200 (in terms of volume) of the amount of the raw material juice used in the boiling step 2-1 for the raw material juice. If the amount of the aqueous solvent is approximately 1/200 or higher (in terms of volume) relative to the amount of the raw material juice, processing on hops can be conducted without any disturbance, while if the amount of the aqueous solvent is approximately 1/10 or lower (in terms of volume), the thermal energy can be efficiently utilized.

The form of hops is not particularly limited, and may be, for example, the forms of pellets, extract, cones, and the like. In addition, as the extract, for example, a $CO_2$ extract, an ethanol extract, and the like may be used. The variety of hops is not particularly limited, and for example, American Nugget, American Cascade, American Chinook, American Citra, American Amarillo, German Saphir, German Hersbrucker, German Tradition, New Zealand Nelson Sauvin, Slovenian Styrian Golding Bobek, Czech saaz, Japanese Shinshuwase, and the like can be used.

2-5: Addition of Hop Suspension

After the boiling, the hop suspension is added to the juice, as it is, or after resin fractions are removed. The hop suspension may be added to the juice at any stage as long as it is before the cooling step 2-3. Adding the hop suspension to the juice before the cooling step 2-3 makes it possible to prevent a sediment of hops from being generated in the raw material juice, thus preventing the device from being contaminated. For example, the hop suspension may be added to the juice in the boiling step 2-1 for the raw material juice or in the solid-liquid separating step 2-2. However, the hop suspension is preferably added to the juice before the solid-liquid separating step 2-2. Adding before the solid-liquid separating step 2-2 makes it possible to remove solid impurity components contained in the hop suspension in the solid-liquid separating step 2-2.

2-6: Addition of Hop Evaporated Components

Meanwhile, the recovered hop evaporated components may be added to the juice in any step after the boiling step 2-1 for the raw material juice, but are particularly preferably added to the juice after the cooling step 2-3. Adding after the cooling step 2-3 makes it possible to prevent the added hop vapor components from evaporating again.

As described above, according to the present invention, it is possible to sufficiently add heat to hops, and to sufficiently extract bitter components from the hops, by boiling the hops separately from the boiling of the raw material juice. In addition, since the hop evaporated components evaporated by the boiling are recovered, aroma components derived from hops can be sufficiently made to be contained in the beer-taste beverage. In other words, it is possible to efficiently take the bitter components and the aroma components of hops into the beer-taste beverage.

In addition, according to the present invention, it is possible to recover components having desired aromas by recovering evaporated components during part of a period of time during the boiling of hops. Accordingly, it is possible to impart various characters to a beer-taste beverage by using the same variety of hops, and thus to achieve more characteristic imparting of aromas (such as recovering mainly floral, fragrant aromas).

Moreover, according to the present invention, the hop suspension is boiled separately from the boiling of the raw material juice, to recover the hop evaporated components. Unlike the case of recovering vapor generated by boiling a raw material juice as described in Published Japanese Translation of PCT International Application No. 2010-539892, the present invention makes it possible to limit evaporated components to components derived from hops. This make it possible to selectively recover desired aroma components by simply controlling the timing to recover vapor, and there is no need to use a large-scale device such as a rectifying tower described in Published Japanese Translation of PCT International Application No. 2010-539892.

Note that in the present invention, the beer-taste beverage may be an unfermented beverage. In a fermented beverage, components with high hydrophobicity such as myrcene are adsorbed onto yeast and removed out of the system, thus being reduced (see, for example, KISHIMOTO, T., Uemura, K., Aizawa, M., "A new insight for controlling the hop flavor using hydrophobicity of yeast cell surface", 34th European Brewery Convention Congress 2013, LUXEMBOURG). By contrast, in an unfermented beverage, yeast fermentation does not take place, and a large amount of components with high hydrophobicity sometimes remain, causing grassy, unpleasant aromas in a final product. Using the present technique makes it possible to selectively allow components such as linalool having floral aroma and 4-mercapto-4-methylpentan-2-one having fruity aroma to be contained in a beverage while reducing components having unpleasant grassiness such as myrcene.

(Examples)

Hereinafter, in order to describe the present invention in more detail, Examples conducted by the present inventors will be described.

Example 1

[Control 1]

After malt and enzyme were reacted with each other at 50°C for 30 minutes, and then at 62°C for 50 minutes, enzyme inactivation was conducted at 76°C, and wort filtration was conducted. The filtrated wort was put into the boiling pot together with a liquid sugar, which was then adjusted with hot water to 200 L. Thereafter, 140 g of hops (American Citra) was added. The content in the pot was boiled for 70 minutes to obtain 184 L of wort, which was again adjusted with hot water to 200 L. Solid-liquid separation was conducted in the whirlpool (whirling separation tank), followed by cooling with the heat exchanger. Thereafter, yeast was added and fermented. The liquid after fermentation was filtrated to be fined. The resultant was diluted 1.6 times, followed by filling to obtain a product.

[Control 2]

After malt and enzyme were reacted with each other at 50°C for 30 minutes, and then at 62°C for 50 minutes, enzyme inactivation was conducted at 76°C, and wort filtration was conducted. The filtrated wort was put into the boiling pot together with a liquid sugar, which was then adjusted with hot water to 200 L. Thereafter, the content in the pot was boiled for 70 minutes to obtain 184 L of wort. After 140 g of hops (American Citra) was added, the content in the pot was again adjusted with hot water to 200 L. Solid-liquid separation was conducted in the whirlpool (whirling separation tank), followed by cooling with the heat exchanger. Thereafter, yeast was added and fermented. The liquid after fermentation was filtrated to be fined. The resultant was diluted 1.6 time, followed by filling to obtain a product.

[Examination]

After malt and enzyme were reacted with each other at 50 °C for 30 minutes, and then at 62°C for 50 minutes, enzyme inactivation was conducted at 76°C and wort filtration was conducted. The filtrated wort was put into the boiling pot together with a liquid sugar, which was then adjusted with hot water to 196 L. The content in the pot was boiled for 70 minutes to obtain 180 L of wort. Meanwhile, 140 g of hops (American Citra) was added in a 4-L boiling pot, and added with hot water to be 4 L, and was boiled for 70 minutes and separated into 3.7 L of a hop extract (hop suspension) and 0.3 L of a hop distillate. Then, 180 L of wort was mixed with 3.7 L of the extract, which was then again adjusted with hot water to 199.7 L. Thereafter, solid-liquid separation was conducted in the whirlpool (whirling separation tank). After the cooling with the heat exchanger, 0.3 L of the aforementioned hop distillate and yeast were added and fermented. The liquid after fermentation was filtrated to be fined. The resultant was diluted 1.6 times, followed by filling to obtain a product.

[Measurement of Isomerization rates of $\alpha$ acids of Wort]

The isomerization rates of $\alpha$ acids derived from hops were measured using a high-performance liquid chromatography for wort after boiling in Controls 1 and 2.
Similarly, the isomerization rate of $\alpha$ acids derived from hops was measured for the hop extract in Examination.
The results are shown in Table 2 below.

[Table 2]

|  | Isomerization Rate (%)* |
|---|---|
| Control 1 | 89.5% |
| Control 2 | 47.0% |
| Examination | 89.2% |
| *represents the ratio of the peak area of the isomerized $\alpha$ acids accounting for the total peak area of the $\alpha$ acids and the isomerized $\alpha$ acids, in the high-performance liquid chromatography. | |

As shown in Table 2, Examination exhibited a value of isomerization rate as 89% or more, higher than 47%, which was the isomerization rate of Control 2 in which all the amount of hops was added after the boiling, and a conversion rate similar to that of Control 1 in which all the amount of hops was added before the boiling.

7

[Measurement of Value of Bitterness and Concentrations of Aroma Components of Products]

For each of Controls 1 and 2 as well as Examination, the value of bitterness (B.U) and the concentrations of aroma components of the product were measured. As the aroma components, the concentrations of linalool, geraniol, citronellol, myrcene, β-ionone, α-eudesmol, and 4-mercapto-4-methylpentan-2-one (represented as 4MMP) were measured by the following methods.

[Measurement of Concentrations of Linalool, Geraniol, Citronellol, Myrcene, β-ionone, and α-eudesmol]

The concentration of each hop aroma component was measured by using a stir bar sorptive extraction method (SBSE method). Specifically, β-damascone was added as an internal standard to a beer-taste fermented beverage, which is the final product, so as to be 0.1 ppb. The sample was diluted 5 times, and 20 ml of the diluted sample was collected in a 30-ml volume vial. A stir bar (Length = 20 mm; Twister (trade name); manufactured by Gerstel GmbH & Co. KG, Germany) coated with 47 μl of PDMS (polydimethylsiloxane) is placed in the vial, and the lid was closed, followed by stirring at 40°C for 2 hours to cause the stir bar to adsorb the hop aroma components. The stir bar was taken out of the vial, and water droplets were completely removed off. Thereafter, the stir bar was inserted into a GC-MS equipped with a thermal desorption unit (TDU; manufactured by Gerstel GmbH & Co. KG) and a programmable temperature-vaporization inlet (CIS4; manufactured by Gerstel GmbH & Co. KG).
The conditions of the GC-MS were as follows:

Gas Chromatograph: 6890 Detector manufactured by Agilent Technologies, Inc.: MSD5973N Quadrupole Mass Spectra (manufactured by Agilent Technologies)
Column: DB-WAX Capillary Column (Length: 60 m, Inner Diameter: 0.25 mm, Film Thickness: 0.25 μm, manufactured by Agilent Technologies)
Injection Port: 250°C, Pulsed Splitless Injection Mode
Injection Volume: 1 μL
Carrier Gas: Helium (1 ml/min)
Column Temperature Setting: 40°C (held for 5 minutes) - (3°C/min) - 240°C (20 minutes)
Mass-to-Charge Ratio: 30 to 350(m/z),
Ionization Conditions: 70 eV, Single Ion-Monitoring (SIM) Mode
Quantification: Conducted by comparing the area of the peak area of each aroma component and the area of the peak area of the internal standard product

[Measurement of Concentration of 4MMP]

An internal standard compound was added to 20 ml of a beer-taste fermented beverage, which is the final product, and pH was adjusted to 10. As a derivatization reagent, ethyl propiolate was added such that the final concentration became 0.6% (v/v) . Aroma was collected for 3 hours by using the stir bar sorptive extraction method using PDMS Twister manufactured by Gerstel GmbH & Co. KG. The collected aroma was analyzed by using Triple Quadrupole GC/MS System manufactured by Agilent Technologies and equipped with Thermal Desorption Unit (TDU) and CIS4 inlet, which are manufactured by Gerstel GmbH & Co. KG. The heating conditions and the detecting conditions are as follows for each equipment.

TDU: 30°C - 720°C/min - 180°C (3 min)
CIS4 inlet: 10°C (0 min) - 720°C/min - 280°C (3 min)

Triple Quadrupole GC/MS System Manufactured by Agilent Technologies

Column: DB-Waxetr (15 m × 0.25 mm (Inner Diameter) × 0.25 μm Thickness)
Oven Temperature Increasing Conditions: 100°C (3 min) - 10°C/min - 250°C (1 min) + post run (Back-flush)
Detector: SRM acquisition mode, collision energy; 2.5V, acquisition speed; 5 Hz, m/z = 230
Quantification: Conducted by comparing the area of the peak area of each aroma component and the area of the peak area of the internal standard product

The results are shown in Table 3.

[Table 3]

| Analyzed Item | Value of Bitterness | Linalool | Geraniol | Citronellol | Myrcene | β-ionone | α-eudesmol | 4MMMP |
|---|---|---|---|---|---|---|---|---|
| Unit | BU | ppb | ppb | ppb | ppb | ppb | ppb | ppb |
| Control 1 | 15 | 2.0 | 3.5 | 2.7 | 1.2 | 0.2 | 0.3 | N.D |
| Control 2 | 5.5 | 46.6 | 7.2 | 9.5 | 1.3 | 0.2 | 0.2 | 4.8 |
| Examination | 14 | 51.2 | 7.8 | 9.1 | 1.7 | 0.2 | 0.3 | 8.6 |

As shown in Table 3, major hop aroma components such as linalool, which is a floral aroma, geraniol, which is a rose-like aroma, and 4-mercapto-4-methylpentan-2-one, which is a fruity aroma were detected at higher values in Examination than in Control 1 in which all the amount of hops were added before the boiling, and also similar to values of Control 2 in which all the amount of hops was added after the boiling. In addition, the value of bitterness of Examination had a larger value than that of Control 2 and also similar to that of Control 1.

Example 2

First, 140 g of hops (American Citra) was added into a 4-L boiling pot, and hot water was added so that the volume reaches 4 L, followed by boiling at such an intensity that 7% of the liquid evaporates per hour. A stationary liquid was sampled as needed, and the concentrations of linalool, geraniol, myrcene, β-ionone, and 4-mercapto-4-methylpentan-2-one (represented as 4MMP) were measured. Specifically, the sampled stationary liquid was diluted 100 times with water to obtain a sample, which was used to measure the concentrations by the same methods as those of Example 1.

Fractionations of the stationary liquid and evaporation coefficients are shown in Table 4, and the results of analysis are shown in Table 5. In addition, 0.5 mL/L of each fraction was added to Asahi Super Dry (trade name) and the wort before fermentation of Control 1 of Example 1, and sensory characteristics derived from hops, obtained by conducting sensory evaluation by a beer expert panel, are shown in Table 6.

[Table 4]

| Fraction No. | Weight of Evaporation (g) | Integrated Weight of Evaporation (g) | Evaporation Coefficient |
|---|---|---|---|
| 1 | 18 | 18 | 0.13 |
| 2 | 23 | 41 | 0.29 |
| 3 | 6 | 46 | 0.33 |
| 4 | 23 | 69 | 0.49 |
| 5 | 23 | 91 | 0.65 |
| 6 | 25 | 116 | 0.83 |
| 7 | 6 | 122 | 0.87 |
| 8 | 21 | 143 | 1.02 |
| 9 | 42 | 185 | 1.32 |
| 10 | 27 | 212 | 1.51 |
| 11 | 47 | 259 | 1.85 |
| 12 | 23 | 281 | 2.01 |

[Table 5]

| Fraction No. | 1 | 2 | 3 | 4 | 5 | 6 | 7 | 8 | 9 | 10 | 11 | 12 |
|---|---|---|---|---|---|---|---|---|---|---|---|---|
| Linalool (ppb) | 60036 | 50749 | 47889 | 40001 | 35707 | 31680 | 30972 | 25341 | 27269 | 27263 | 25518 | 22842 |
| Geraniol (ppb) | 11137 | 11328 | 10892 | 10875 | 10523 | 12341 | 9926 | 10315 | 8869 | 9724 | 9271 | 8564 |
| 4MMP (ppb) | 13 | 11 | 10 | 9 | 8 | 7 | 8 | 7 | 6 | 5 | 4 | 3 |
| Linalool/G eraniol | 5.39 | 4.48 | 4.40 | 3.68 | 3.39 | 2.57 | 3.12 | 2.46 | 3.07 | 2.80 | 2.75 | 2.67 |
| 4MMP/Geran iol | 0.0011 | 0.0009 | 0.0009 | 0.0008 | 0.0008 | 0.0006 | 0.0008 | 0.0007 | 0.0007 | 0.0005 | 0.0004 | 0.0004 |
| Myrcene (ppb) | 1958 | 1710 | 1613 | 1959 | 1662 | 1873 | 869 | 1066 | 1451 | 2940 | 1638 | 1896 |
| Myrcene/Ge raniol | 0.18 | 0.15 | 0.15 | 0.18 | 0.16 | 0.15 | 0.09 | 0.10 | 0.16 | 0.30 | 0.18 | 0.22 |
| $\beta$-ionone (ppb) | 38 | 38 | 32 | 34 | 37 | 28 | 19 | 21 | 16 | 26 | 20 | 28 |

[Table 6]

| Fraction No. | Super Dry | Wort Before Fermentation |
|---|---|---|
| 1 | Fruity Strong, Muscat Strong, Floral | Fruity Strong, Muscat Strong, Floral |
| 2 | Fruity, Muscat, Floral | Fruity, Floral |
| 3 | Muscat, Floral, Fragrant, Citrus | Fruity, Floral, Citrus |
| 4 | Muscat, Floral, Fragrant | Muscat, Floral, Fragrant |
| 5 | Floral, Fragrant, Citrus | Muscat, Floral |
| 6 | Muscat, Rose | Muscat, Rose, Tea |
| 7 | Muscat, Rose | Muscat, Rose, Tea |
| 8 | Rose | Rose, Tea |
| 9 | Rose | Rose, Tea |
| 10 | Rose, Resin | Rose, Tea, Resin |
| 11 | Rose, Green | Rose, Tea, Resin |
| 12 | Rose, Green | Tea, Resin |

As shown in Table 5, it was acknowledged that the contents of aroma components were different among the fractions. In addition, as shown in Table 6, it was acknowledged also from the sensory evaluation that there were differences in characteristics among the fractions. In other words, as shown in Table 6, in both of the "Super Dry" and the "wort before fermentation," Fractions FR1 to 5 had fragrant or floral characteristic. On the other hand, Fractions after Fraction FR5 had rose-like characteristic. Further, at least Fractions FR1 to 5 tended to have fruity or muscat-like characteristic.

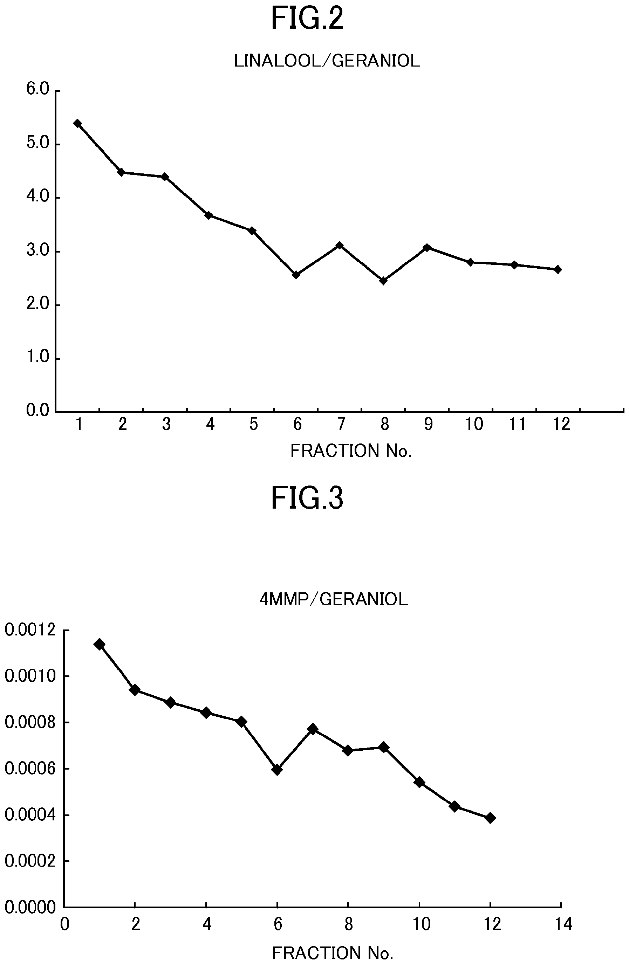

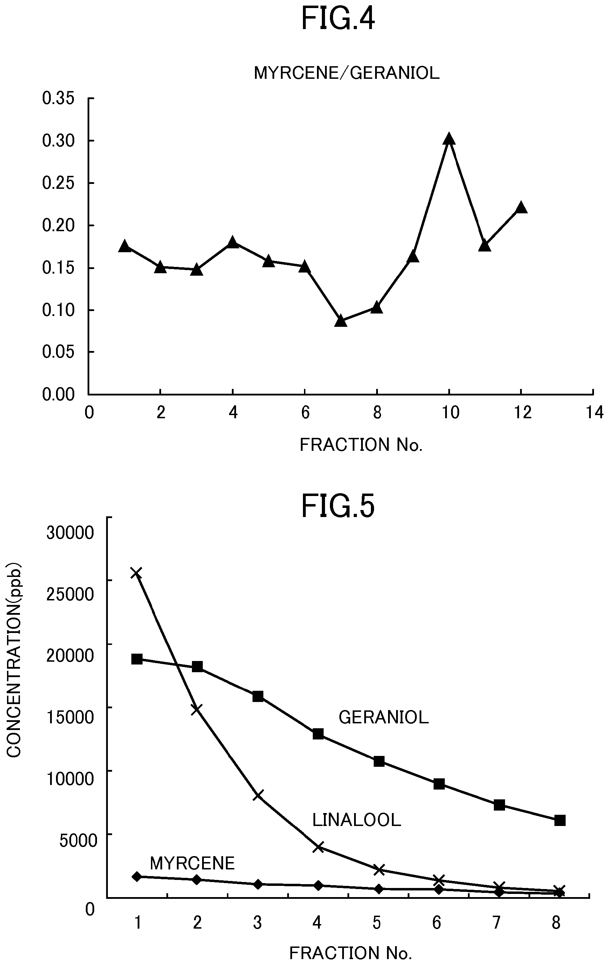

Fig. 2 is a graph showing a concentration ratio between linalool and geraniol (linalool (ppb) /geraniol (ppb)) for each fraction. In addition, Fig. 3 is a graph showing a concentration ratio between 4MMP and geraniol (4MMP (ppb)/geraniol (ppb)) for each fraction. Fig. 4 is a graph showing a concentration ratio between myrcene and geraniol (myrcene (ppb)/geraniol (ppb)) for each fraction. Linalool has fragrant, floral characteristics as characteristic aroma of the hops. Then, 4MMP has fruity, muscat-like characteristics. Geraniol has such a characteristic that its evaporation is stable. Myrcene is a component having unpleasant grassiness as described above.

From Fig. 2, in Fractions FR1 to 5 having fragrant or floral characteristic, the ratio of linalool/geraniol was 3.2 or more. In other words, it can be understood that a component having a floral characteristic can be selectively obtained by recovering vapor when the ratio of linalool/geraniol is 3.2 or more. In addition, in the Fraction FR6 or later having a rose-like characteristic, the ratio of linalool/geraniol was less than 3.2. In other words, it can be understood that a component having a rose-like characteristic can be selectively obtained by recovering vapor when the ratio of linalool/geraniol is less than 3.2.

Further, as shown in Fig. 3, in Fractions FR1 to 5 having fruity or muscat-like characteristics, the ratio of 4-mercapto-4-methylpentan-2-one/geraniol was 0.0008 or more. In other words, it can be understood that a component having a fruity or muscat-like characteristic can be selectively obtained by recovering vapor when the ratio of 4-mercapto-4-methylpentan-2-one/geraniol is 0.0008 or more.

As described above, it was acknowledged that a target aroma characteristic could be exhibited by controlling the timing to recover vapor.

In addition, as shown in Fig. 4, in all the fractions, the concentration ratio of myrcene/geraniol was 0.3 or less. As already described, myrcene is a component that causes an unpleasant odor. According to the invention of the present application, the content of myrcene can be sufficiently reduced relative to the other aroma components such as geraniol, by boiling a mixture of hops and an aqueous solvent, and recovering the above as hop evaporated components.

Example 3

Subsequently, an experiment similar to that of Example 2 was conducted while a larger production scale than that of Example 2 was employed. Specifically, 1532 g of hops (Cascade species; $\alpha$ acid content of 6.3%) was charged into a 50-L boiling pot and 50 L of water was added. Next, boiling was conducted with a boiling intensity of 20%, and components thus evaporated were cooled and recovered as a liquid. Every one liter of evaporated components was recovered up to 8 L. The concentrations of geraniol, linalool, and myrcene were measured for each recovered stationary liquid (Fraction) by the same method as that in Example 2.

Note that the boiling intensity is a value representing the evaporation rate of a liquid per hour, and is calculated by the following mathematical formula.

[Math. 1]

$$\text{Boiling Intensity}$$

$$= \frac{\text{Liquid Amount Before Boiling (L)} - \text{Liquid Amount After Boiling (L)}}{\text{Liquid Amount Before Boiling (L)}}$$

$$\times \frac{60 \text{ (min)}}{\text{Boiling Time (min)}} \times 100 \text{ (\%)}$$

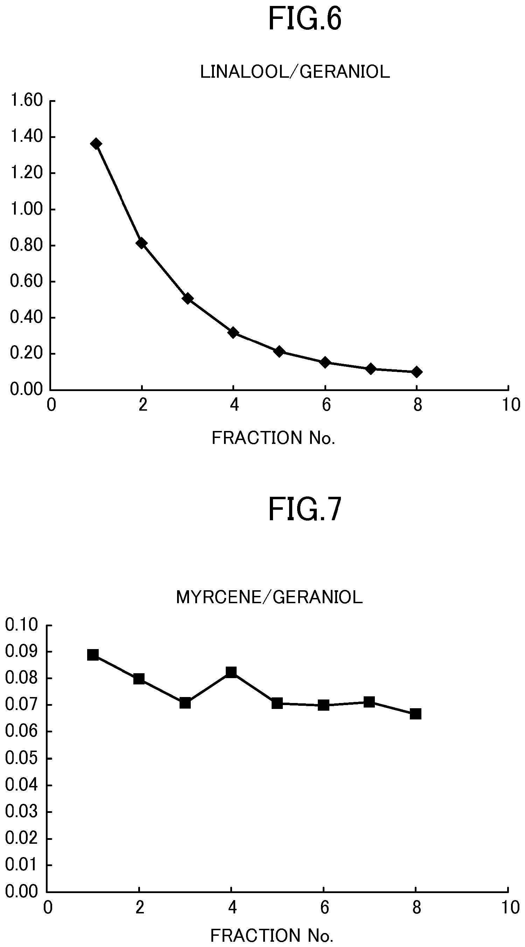

The results of the measurement are shown in Table 7. In addition, Fig. 5 is a graph showing a relation between each fraction and the concentration of each aroma component. Fig. 6 is a graph showing the concentration ratios of linalool/geraniol. Fig. 7 is a graph showing the concentration ratios of myrcene/geraniol.

[Table 7]

| Fraction No. | 1 | 2 | 3 | 4 | 5 | 6 | 7 | 8 |
|---|---|---|---|---|---|---|---|---|
| Myrcene | 1674 | 1446 | 1118 | 1059 | 759 | 634 | 517 | 410 |
| Linalool | 25840 | 14801 | 8021 | 4088 | 2269 | 1358 | 844 | 598 |
| Geraniol | 18829 | 18201 | 15836 | 12902 | 10773 | 9020 | 7324 | 6157 |
| Linalool/Geraniol | 1.38 | 0.81 | 0.51 | 0.32 | 0.21 | 0.15 | 0.11 | 0.10 |
| Myrcene/Geraniol | 0.09 | 0.08 | 0.07 | 0.08 | 0.07 | 0.07 | 0.07 | 0.07 |

As shown in Fig. 5, the concentration of each aroma component (myrcene, linalool, and geraniol) was changed with the lapse of time, that is, according to the integrated amount of evaporation. In other words, every component had a tendency that the concentration decreased with the lapse of time. However, the behavior was different among aroma components, and geraniol had a relatively small amount of decrease in concentration with the lapse of time while linalool had a large amount of decrease in concentration with the lapse of time.

Moreover, as shown in Fig. 6, it was found that the concentration ratio of linalool/geraniol decreased with the lapse of time. Further, as shown in Fig. 7, the concentration ratio of myrcene/geraniol was 0.10 or less throughout all the fractions, and it was possible to significantly reduce the concentration of myrcene, which causes an unpleasant odor, relative to the concentrations of the other aroma components.

(Second Embodiment)

Subsequently, Second Embodiment of the present invention will be described. In this embodiment, the method of recovering hop evaporated components is further devised, compared with First Embodiment.

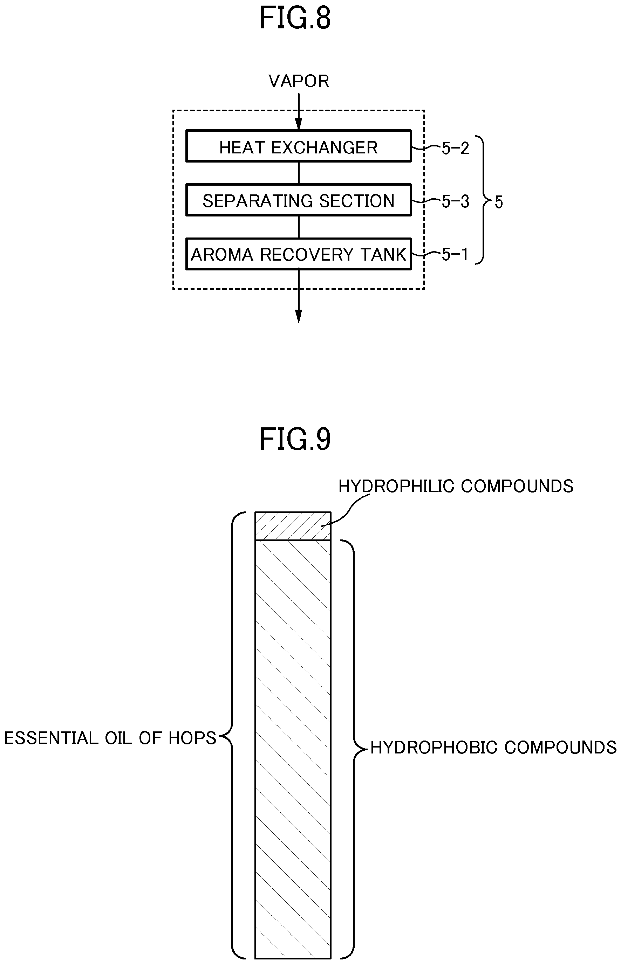

Fig. 8 is a diagram schematically showing a configuration of a recovery device 5 in a beer-taste beverage producing apparatus 10 according to this embodiment. In this embodiment, a separating section 5-3 is added between a heat exchanger 5-2 and an aroma recovery tank 5-1. In this embodiment, vapor of a hop suspension is cooled by the heat exchanger 5-2, and is guided as a condensate to the separating section 5-3. The separating section 5-3 has a function to separate an oil phase and a water phase of the condensate. The water phase separated in the separating section 5-3 is recovered as hop evaporated components into the aroma recovery tank 5-1.

Note that as the configurations of the other parts, configurations similar to those of First Embodiment may be employed.

As already described, vapor of a hop suspension also contains components that contribute to undesired aromas, such as myrcene. However, according to this embodiment, the condensate is separated into an oil phase and a water phase in the separating section 5-3, and only the water phase is selectively recovered. This makes it possible to recover only components that impart favorable aromas among components derived from hops. This point will be described below.

Fig. 9 is a diagram conceptually showing components contained in an essential oil of hops and ratios thereof.

As shown in Fig. 9, the essential oil of hops contains hydrophilic compounds and hydrophobic compounds (hydrocarbons). Here, hydrophobic compounds contain a large amount of components that cause the odor of raw hops (grassy odor). On the other hand, among components contained in the essential oil of hops, components that contribute to favorable aromas are mainly hydrophilic compounds. Accordingly, by separating a condensate into an oil phase and a water phase and selectively recovering only the water phase, it is possible to remove components that cause the odor of raw hops and to thus condense components that impart favorable aromas.

Example Experiments

Hereinafter, to describe the advantageous effects of this embodiment in detail, Example Experiments will be described.

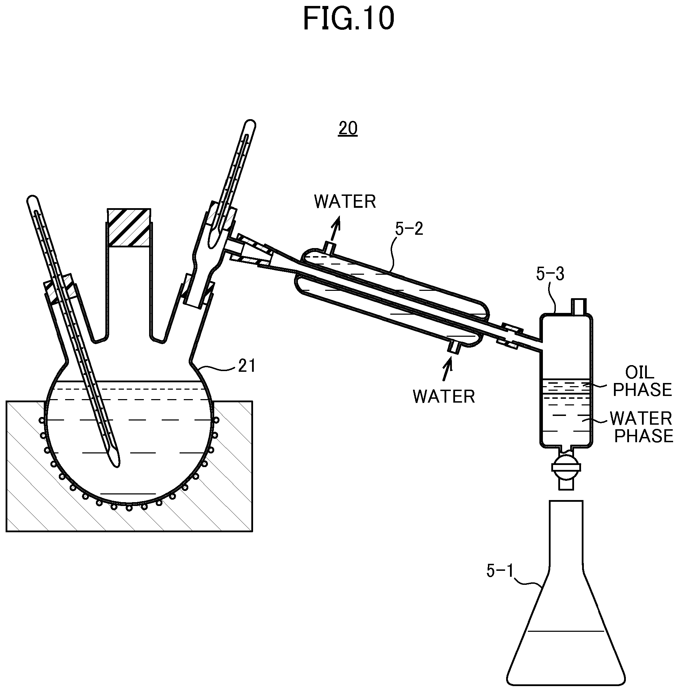

A device as shown in Fig. 10 was prepared as an experiment device 20. This experiment device 20 includes a three-necked flask 21, a cooling tube (heat exchanger 5-2) connected to the three-necked flask 21, a container (separating section 5-3) connected to the cooling tube, and a flask (recovery tank 5-1) .

In the three-necked flask 21, 657 g of $CO_2$ extract of Cascade hops and 1314 g of deionized water were added to obtain a hop suspension. The hop suspension was boiled at 100°C at atmospheric pressure. Vapor of the hop suspension was cooled by the cooling tube and a condensate was introduced into the container. In the container, the condensate was separated into an oil phase and a water phase. Boiling was conducted until 657 g of the water phase and 5.21 g of the oil phase were obtained. Thereafter, the water phase was recovered as hop evaporated components into an Erlenmeyer flask.

The concentration of each component in the recovered hop evaporated components was measured by gas chromatography. In addition, the concentration of each component in the $CO_2$ extract of Cascade hops, which were a raw material, was similarly measured by gas chromatography.

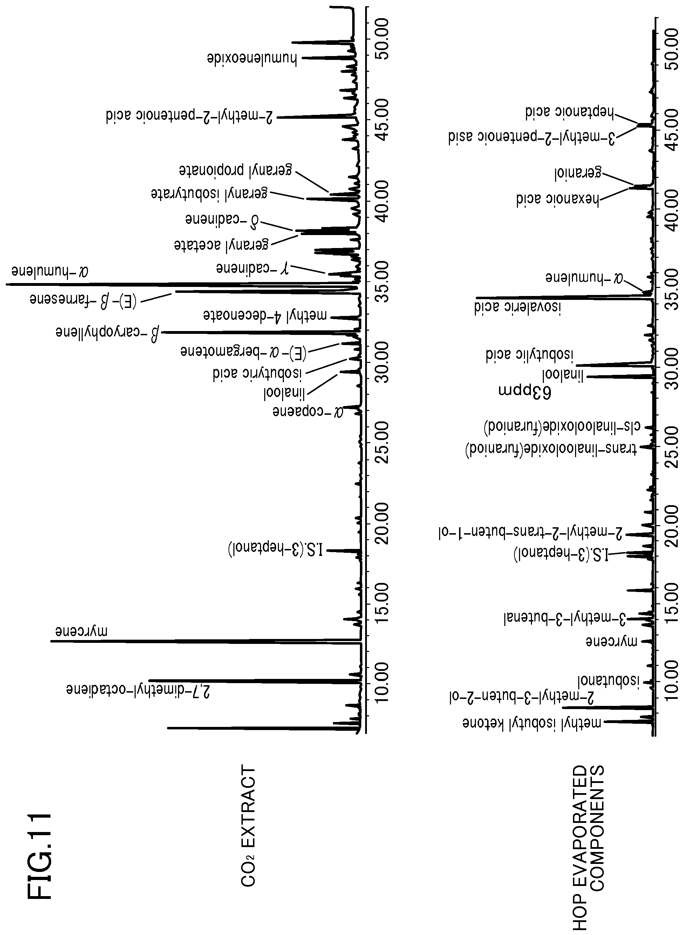

The results are shown in Fig. 11. As shown in Fig. 11, in the recovered hop evaporated components, the concentrations of myrcene and $\alpha$-humulene were significantly reduced, compared with the $CO_2$ extract of Cascade hops. On the other hand, the concentration of linalool was increased. Hydrocarbons containing myrcene and $\alpha$-humulene are components that causes the odor of raw hops. From these, it was acknowledged that it is possible to remove components that cause the odor of raw hops and condense desired aroma components such as linalool, by extracting only the water phase in the separating section 5-3.

Subsequently, wort of 100% of malt was used as a raw material juice, and (100) g of American Cascade hops were added to 200 L of the raw material juice at the start of boiling, followed by boiling for 70 minutes. After the boiling was finished, (100) g of American Cascade hops (5.6% of $\alpha$ acids) was added to obtain wort. After the obtained wort was cooled to 6°C, yeast was added. At the same as the addition of yeast, 160 g of the recovered hop evaporated components was added. Thereafter, fermentation was conducted in a 200-L tank at 10°C for 1 week. Then, maturation was conducted at 10°C for 1 week. After that, the resultant was cooled to -1°C, and left to stand in the tank for 1 week. The obtained liquid was used as a beverage according to Examination 2.

Meanwhile, a beverage according to Control 3 was obtained in the same method as that for Examination 2 except that the hop evaporated components were not added.

The concentrations of aroma components derived from hops were measured for the beverages according to Examination 2 and Control 3. The results are shown in Table 8.

In addition, the intensities of hop aroma of Examination 2 and Control 3 were compared by a sensory test. The sensory test was conducted by a panel of 6 experts to evaluate which had a higher intensity of hop aroma, Examination 2 or Control 3. The results are shown in Table 9. Note that in Table 9, the results of hop aroma show the number of people who determined that it had a more intense hop aroma.

Further, characteristic values (gravity, the amount of extracts, attenuation, and the like) as beer were measured for the beverages of Examination 2 and Control 3. The results are shown in Table 10.

[Table 8]

| Component | Control 3 | Examination 2 |
|---|---|---|
| Linalool (ppb) | 105.7 | 208.8 |
| Geraniol (ppb) | 27.3 | 33.5 |
| β-citronellol (ppb) | 37.9 | 45.6 |
| β-myrcene (ppb) | 3.3 | 5.2 |

[Table 9]

| Item | Control 3 | Examination 2 |
|---|---|---|
| Hop Aroma | 0 | 6 |
| Comment on Characteristics | Weak Aroma, Resin-like, Raw Hops, Floral, Raw Pellet Odor | Strong Aroma, Floral (3), Muscat (2), Citrus, Fruity, Good Aroma Balance |

[Table 10]

| Item | Unit | Control 3 | Examination 2 |
|---|---|---|---|
| Gravity | | 1.00721 | 1.00720 |
| Raw Wort Extract | % | 12.44 | 12.38 |
| Alcohol By Volume | V/V% | 5.63 | 5.60 |
| Real Extract | % | 3.89 | 3.87 |
| Real Attenuation | % | 70.13 | 70.14 |
| Apparent Extract | % | 1.85 | 1. 85 |
| Apparent Attenuation | % | 85.13 | 85.06 |
| Final Attenuation | % | 86.2 | 86.1 |
| pH | | 4.67 | 4.68 |
| Gas Pressure | MPa | 0.215 | 0.211 |
| Value of Bitterness | BU | 45.5 | 45.0 |
| Amino Nitrogen | mg/100ml | 13.0 | 13.2 |
| Ethyl Acetate | ppm | 18.9 | 18.5 |
| Isobutanol | ppm | 7.5 | 7.2 |
| Isoamyl Acetate | ppm | 1.5 | 1.5 |
| Isoamyl Alcohol | ppm | 52.1 | 51.5 |
| Ethyl Caproate | ppm | 0.2 | 0.2 |
| Ethyl Caprylate | ppm | 0.2 | 0.2 |
| β-phenethyl Acetate | ppm | 0.4 | 0.4 |
| β-phenethyl alcohol | ppm | 18.8 | 19.7 |
| NIBEM | Seconds | 290 | 286 |

As shown in Table 8, in Examination 2, the contents of linalool, geraniol, and β-citronellol were larger than those of Control 3, it was acknowledged that the contents of aroma components derived from hops were increased. In addition, although the concentration of β-myrcene was slightly larger in Examination 2 than in Control 3, the different was very small. In other words, it was acknowledged that even though vapor of the hop suspension was recovered, the separation of the water phase and the oil phase made it possible to suppress the concentration of β-myrcene to the level similar to that in Control 3, in which vapor was not recovered.

In addition, as shown in Table 9, as the result of the sensory evaluation, it was acknowledged that Examination had a more intense hop aroma than Control.

Further, as shown in Table 10, in Examination, parameters caused by amino acids, alcohols, foam, fermentation, and the like of the beverage were little different from those of Control.

As the above results, it was acknowledged that it was possible to increase the contents of aroma components derived from hops and to thus intensify only the hop aroma, without affecting the other characteristics (the content of amino acids, the alcohol by volume, the state of foam, the attenuation, and the like) of the beverage, by adding hop evaporated components, which were obtained by this embodiment, to the raw material juice.

**Claims**

1. A method for producing a beer-taste beverage, comprising:

    boiling a raw material juice;
    cooling the boiled juice;
    heating at 70 °C or more a hop suspension which is a mixture of hops and an aqueous solvent and recovering vapor as hop evaporated components;
    adding the heated hop suspension to the juice before the cooling; and
    adding the recovered hop evaporated components to the juice after the boiling.

2. The method according to claim 1, further comprising:

    holding the boiled juice in a whirling separation tank before the cooling,
    wherein the hop suspension is added to the juice during the boiling or to the juice being held in the whirling separation tank.

3. The method according to claim 1 or 2, wherein the recovering comprises cooling the vapor to obtain a condensate.

4. The method according to claim 3, wherein the recovering comprises removing an oil phase of the condensate while recovering a water phase of the condensate as the hop evaporated components.

5. The method according to any one of claims 1 to 4, wherein the hop suspension contains no malt-derived component.

6. The method according to any one of claims 1 to 5, wherein the recovering comprises selectively recovering part of the vapor.

7. The method according to claim 6, wherein the recovering comprises recovering the vapor at a predetermined timing.

8. The method according to claim 7, comprising recovering the vapor when a concentration ratio of linalool/geraniol in the vapor is 3.2 or more.

9. The method according to claim 7, comprising recovering the vapor when a concentration ratio of linalool/geraniol in the vapor is less than 3.2.

10. The method according to claim 7, comprising recovering the vapor when a concentration ratio of myrcene/geraniol in the vapor is less than 0.3.

11. The method according to claim 7, comprising recovering the vapor when a concentration ratio of 4-mercapto-4-methylpentan-2-one/geraniol in the vapor is 0.0008 or more.

12. The method according to any one of claims 7 to 11, wherein the recovering comprises recovering the vapor when an evaporation coefficient is a predetermined value, and
    the evaporation coefficient is defined by a numerical value obtained by dividing a weight (integrated value) of the evaporated hop suspension by a weight of hops added to the hop suspension.

13. The method according to claim 12, comprising recovering the vapor when the evaporation coefficient is 2.0 or less.

14. The method according to claim 12, comprising recovering the vapor when the evaporation coefficient is 0.9 or less.

15. The method according to claim 12, comprising recovering the vapor when the evaporation coefficient is 0.7 or less.

16. The method according to any one of claims 1 to 15, wherein the raw material juice is wort.

17. The method according to any one of claims 1 to 16, wherein the beer-taste beverage is an unfermented beverage.

18. A method for imparting hop aroma to beer-taste beverage, comprising:

boiling a hop suspension which is a mixture of hops and an aqueous solvent and recovering vapor as hop evaporated components; and

adding the recovered hop evaporated components to a juice after cooling,

wherein the juice after the cooling is a liquid obtained by boiling and then cooling a raw material juice,

the hop suspension contains no malt-derived component and

the recovering comprises recovering the vapor when the evaporation coefficient is 2.0 or less and

the evaporation coefficient is defined by a numerical value obtained by dividing a weight (integrated value) of the evaporated hop suspension by a weight of hops added to the hop suspension.

19. The method according to claim 18, wherein the recovering comprises heating the hop suspension under a condition of 70°C or more.

20. The method according to claim 18 or 19, wherein the recovering comprises selectively recovering part of the vapor.

21. The method according to any one of claims 18 to 20 wherein the recovering comprises recovering the vapor at a predetermined timing after start of heating the hop suspension.

22. The method according to any one of claims 18 to 21, wherein the recovering comprises cooling the vapor to obtain a condensate.

23. A beer-taste beverage producing apparatus comprising:

a hop processing device configured to boil a hop suspension which is a mixture of hops and an aqueous solvent;

a recovery device configured to recover vapor as hop evaporated components from the hop processing device;

a raw-material juice boiling device configured to boil a raw material juice;

a whirling separation tank which subjects the juice after the boiling to solid-liquid separation;

a juice cooling device after the whirling separation tank configured to cool the boiled juice;

a hop suspension charging line configured to charge the hop suspension after boiling from the hop processing device to the juice before the cooling; and

an evaporated component charging line configured to charge the hop evaporated components from the recovery device to the juice after a boiling step conducted by the raw-material juice boiling device,

wherein

the hop processing device is connected to the raw-material juice boiling device through the hop suspension charging line

or

the hop suspension charging line is connected to the whirlpool.

24. The beer-taste beverage producing apparatus according to claim 23, wherein the recovery device comprises:

a heat exchanger configured to cool the vapor to generate a condensate; and

a separating section configured to remove an oil phase of the condensate while recovering a water phase of the condensate as the hop evaporated components.

**Patentansprüche**

1. Verfahren zum Herstellen eines Getränks mit Biergeschmack, umfassend:

Kochen eines Rohmaterialsaftes;

Abkühlen des gekochten Saftes;

Erhitzen einer Hopfensuspension, die eine Mischung aus Hopfen und einem wässrigen Lösungsmittel ist, auf 70 °C oder mehr und Rückgewinnen von Dampf als verdampfte Hopfenkomponenten;

Hinzufügen der erhitzten Hopfensuspension zu dem Saft vor dem Abkühlen; und

Hinzufügen der zurückgewonnenen verdampften Hopfenkomponenten zu dem Saft nach dem Kochen.

**2.** Verfahren nach Anspruch 1, ferner umfassend:
Halten des gekochten Safts vor dem Abkühlen in einem Wirbelabscheidebehälter, wobei die Hopfensuspension dem Saft während des Kochens oder dem in dem Wirbelabscheidebehälter gehaltenen Saft zugesetzt wird.

**3.** Verfahren nach Anspruch 1 oder 2, wobei das Rückgewinnen das Kühlen des Dampfes umfasst, um ein Kondensat zu erhalten.

**4.** Verfahren nach Anspruch 3, wobei das Rückgewinnen das Entfernen einer Ölphase des Kondensats umfasst, während eine Wasserphase des Kondensats als die verdampften Hopfenkomponenten gewonnen wird.

**5.** Verfahren nach einem der Ansprüche 1 bis 4, wobei die Hopfensuspension keine von Malz abgeleitete Komponente enthält.

**6.** Verfahren nach einem der Ansprüche 1 bis 5, wobei das Rückgewinnen das selektive Rückgewinnen eines Teils des Dampfes umfasst.

**7.** Verfahren nach Anspruch 6, wobei das Rückgewinnen das Rückgewinnen des Dampfes zu einem vorbestimmten Zeitpunkt umfasst.

**8.** Verfahren nach Anspruch 7, umfassend das Rückgewinnen des Dampfes, wenn ein Konzentrationsverhältnis von Linalool/Geraniol in dem Dampf 3,2 oder mehr beträgt.

**9.** Verfahren nach Anspruch 7, umfassend das Rückgewinnen des Dampfes, wenn ein Konzentrationsverhältnis von Linalool/Geraniol in dem Dampf weniger als 3,2 beträgt.

**10.** Verfahren nach Anspruch 7, umfassend das Rückgewinnen des Dampfes, wenn ein Konzentrationsverhältnis von Myrcen/Geraniol in dem Dampf weniger als 0,3 beträgt.

**11.** Verfahren nach Anspruch 7, umfassend das Rückgewinnen des Dampfes, wenn ein Konzentrationsverhältnis von 4-Mercapto-4-methylpentan-2-on/Geraniol in dem Dampf 0,0008 oder mehr beträgt.

**12.** Verfahren nach einem der Ansprüche 7 bis 11, wobei das Rückgewinnen das Rückgewinnen des Dampfes umfasst, wenn ein Verdampfungskoeffizient ein vorbestimmter Wert ist, und wobei der Verdampfungskoeffizient durch einen numerischen Wert definiert ist, der durch Teilen eines Gewichts (integrierter Wert) der verdampften Hopfensuspension durch ein Gewicht von Hopfen, der der Hopfensuspension zugesetzt wird, erhalten wird.

**13.** Verfahren nach Anspruch 12, umfassend das Rückgewinnen des Dampfes, wenn der Verdampfungskoeffizient 2,0 oder weniger beträgt.

**14.** Verfahren nach Anspruch 12, umfassend das Rückgewinnen des Dampfes, wenn der Verdampfungskoeffizient 0,9 oder weniger beträgt.

**15.** Verfahren nach Anspruch 12, umfassend das Rückgewinnen des Dampfes, wenn der Verdampfungskoeffizient 0,7 oder weniger beträgt.

**16.** Verfahren nach einem der Ansprüche 1 bis 15, wobei der Rohmaterialsaft Bierwürze ist.

**17.** Verfahren nach einem der Ansprüche 1 bis 16, wobei das Getränk mit Biergeschmack ein unfermentiertes Getränk ist.

**18.** Verfahren zum Verleihen von Hopfenaroma an ein Getränk mit Biergeschmack, umfassend:

Kochen einer Hopfensuspension, die eine Mischung aus Hopfen und einem wässrigen Lösungsmittel ist, und Rückgewinnen von Dampf als verdampfte Hopfenkomponenten; und
Zugabe der zurückgewonnenen verdampften Hopfenkomponenten zu einem Saft nach dem Abkühlen,
wobei der Saft nach dem Abkühlen eine Flüssigkeit ist, die durch Kochen und anschließendes Abkühlen eines Rohmaterialsaftes erhalten wird,
wobei die Hopfensuspension keine von Malz abgeleitete Komponente enthält, und

wobei das Rückgewinnen das Rückgewinnen des Dampfes umfasst, wenn der Verdampfungskoeffizient 2,0 oder weniger ist,
und
wobei der Verdampfungskoeffizient als ein numerischer Wert definiert ist, der durch Teilen eines Gewichts (integrierter Wert) der verdampften Hopfensuspension durch ein Gewicht von Hopfen, der der Hopfensuspension zugesetzt wird, erhalten wird.

19. Verfahren nach Anspruch 18, wobei das Rückgewinnen das Erhitzen der Hopfensuspension unter einer Bedingung von 70 °C oder mehr umfasst.

20. Verfahren nach Anspruch 18 oder 19, wobei das Rückgewinnen das selektive Rückgewinnen eines Teils des Dampfes umfasst.

21. Verfahren nach einem der Ansprüche 18 bis 20, wobei das Rückgewinnen das Rückgewinnen des Dampfes zu einem vorbestimmten Zeitpunkt nach dem Beginn des Erhitzens der Hopfensuspension umfasst.

22. Verfahren nach einem der Ansprüche 18 bis 21, wobei das Rückgewinnen das Kühlen des Dampfes umfasst, um ein Kondensat zu erhalten.

23. Vorrichtung zur Herstellung von Getränken mit Biergeschmack, umfassend:

eine Hopfenverarbeitungseinrichtung, die konfiguriert ist, um eine Hopfensuspension zu kochen, die eine Mischung aus Hopfen und einem wässrigen Lösungsmittel ist;
eine Rückgewinnungseinrichtung, die konfiguriert ist, um Dampf als verdampfte Hopfenkomponenten aus der Hopfenverarbeitungseinrichtung zurückzugewinnen;
eine Rohmaterialsaft-Kocheinrichtung, die konfiguriert ist, um einen Rohmaterialsaft zu kochen;
einen Wirbelabscheidebehälter, der den Saft nach dem Kochen einer fest-flüssig-Trennung aussetzt;
eine Saftkühleinrichtung nach dem Wirbelabscheidebehälter, die konfiguriert ist, um den gekochten Saft zu kühlen;
eine Hopfensuspensions-Beschickungsleitung, die konfiguriert ist, um die Hopfensuspension nach dem Kochen von der Hopfenverarbeitungseinrichtung in den Saft vor dem Abkühlen zu geben; und
eine Beschickungsleitung für verdampfte Komponenten, die konfiguriert ist, um die verdampften Hopfenkomponenten von der Rückgewinnungseinrichtung nach einem Kochschritt, der von der Rohmaterialsaft-Kocheinrichtung durchgeführt wird, dem Saft zuzuführen,
wobei

die Hopfenverarbeitungseinrichtung mit der Rohmaterialsaft-Kocheinrichtung durch die Hopfensuspensions-Beschickungsleitung verbunden ist
oder
die Hopfensuspensions-Beschickungsleitung mit dem Wirbelabscheidebehälter verbunden ist.

24. Vorrichtung zur Herstellung von Getränken mit Biergeschmack nach Anspruch 23, wobei die Rückgewinnungseinrichtung Folgendes umfasst:

einen Wärmetauscher, der konfiguriert ist, um den Dampf zu kühlen, um ein Kondensat zu erzeugen; und
einen Trennabschnitt, der konfiguriert ist, um eine Ölphase des Kondensats zu entfernen, während eine Wasserphase des Kondensats als die verdampften Hopfenkomponenten zurückgewonnen wird.

**Revendications**

1. Procédé de production d'une boisson au goût de bière, comprenant :

l'ébullition d'un jus de matière première ;
le refroidissement du jus bouilli ;
le chauffage à 70 °C ou plus d'une suspension de houblon qui est un mélange de houblons et d'un solvant aqueux et la récupération de la vapeur sous forme de composants évaporés de houblon ;
l'ajout de la suspension de houblon chauffée au jus avant le refroidissement ; et

l'ajout des composants évaporés de houblon récupérés au jus après l'ébullition.

2. Procédé selon la revendication 1, comprenant en outre :

le maintien du jus bouilli dans un réservoir de séparation tourbillonnant avant le refroidissement,
dans lequel la suspension de houblon est ajoutée au jus pendant l'ébullition ou au jus pendant qu'il est maintenu dans le réservoir de séparation tourbillonnant.

3. Procédé selon la revendication 1 ou 2, dans lequel la récupération comprend le refroidissement de la vapeur pour obtenir un condensat.

4. Procédé selon la revendication 3, dans lequel la récupération comprend l'élimination d'une phase huileuse du condensat tout en récupérant une phase d'eau du condensat sous la forme des composants évaporés de houblon.

5. Procédé selon l'une quelconque des revendications 1 à 4, dans lequel la suspension de houblon ne contient pas de composant dérivé du malt.

6. Procédé selon l'une quelconque des revendications 1 à 5, dans lequel la récupération comprend la récupération sélective d'une partie de la vapeur.

7. Procédé selon la revendication 6, dans lequel la récupération comprend la récupération de la vapeur à un moment prédéterminé.

8. Procédé selon la revendication 7, comprenant la récupération de la vapeur lorsqu'un rapport de concentration linalool/géraniol dans la vapeur est de 3,2 ou plus.

9. Procédé selon la revendication 7, comprenant la récupération de la vapeur lorsqu'un rapport de concentration linalool/géraniol dans la vapeur est inférieur à 3,2.

10. Procédé selon la revendication 7, comprenant la récupération de la vapeur lorsqu'un rapport de concentration myrcène/géraniol dans la vapeur est inférieur à 0,3.

11. Procédé selon la revendication 7, comprenant la récupération de la vapeur lorsqu'un rapport de concentration 4-mercapto-4-méthylpentan-2-one/géraniol dans la vapeur est de 0,0008 ou plus.

12. Procédé selon l'une quelconque des revendications 7 à 11, dans lequel la récupération comprend la récupération de la vapeur lorsqu'un coefficient d'évaporation est une valeur prédéterminée, et
le coefficient d'évaporation est défini par une valeur numérique obtenue en divisant un poids (valeur intégrée) de la suspension de houblon évaporée par un poids de houblons ajoutés à la suspension de houblon.

13. Procédé selon la revendication 12, comprenant la récupération de la vapeur lorsque le coefficient d'évaporation est de 2,0 ou moins.

14. Procédé selon la revendication 12, comprenant la récupération de la vapeur lorsque le coefficient d'évaporation est de 0,9 ou moins.

15. Procédé selon la revendication 12, comprenant la récupération de la vapeur lorsque le coefficient d'évaporation est de 0,7 ou moins.

16. Procédé selon l'une quelconque des revendications 1 à 15, dans lequel le jus de matière première est du moût.

17. Procédé selon l'une quelconque des revendications 1 à 16, dans lequel la boisson au goût de bière est une boisson non fermentée.

18. Procédé pour conférer un arôme de houblon à une boisson au goût de bière, comprenant :

l'ébullition d'une suspension de houblon qui est un mélange de houblons et d'un solvant aqueux et la récupération de la vapeur sous forme de composants évaporés de houblon ; et

l'ajout des composants évaporés de houblon récupérés à un jus après le refroidissement,

dans lequel le jus après le refroidissement est un liquide obtenu en faisant bouillir puis refroidir un jus de matière première,

la suspension de houblon ne contient pas de composant dérivé du malt et la récupération comprend la récupération de la vapeur lorsque le coefficient d'évaporation est de 2,0 ou moins et le coefficient d'évaporation est défini par une valeur numérique obtenue en divisant un poids (valeur intégrée) de la suspension de houblon évaporée par un poids de houblons ajoutés à la suspension de houblon.

19. Procédé selon la revendication 18, dans lequel la récupération comprend le chauffage de la suspension de houblon dans une condition de 70 °C ou plus.

20. Procédé selon la revendication 18 ou 19, dans lequel la récupération comprend la récupération sélective d'une partie de la vapeur.

21. Procédé selon l'une quelconque des revendications 18 à 20 dans lequel la récupération comprend la récupération de la vapeur à un moment prédéterminé après le début du chauffage de la suspension de houblon.

22. Procédé selon l'une quelconque des revendications 18 à 21, dans lequel la récupération comprend le refroidissement de la vapeur pour obtenir un condensat.

23. Appareil de production de boisson au goût de bière comprenant :

un dispositif de traitement du houblon configuré pour faire bouillir une suspension de houblon qui est un mélange de houblons et d'un solvant aqueux ;

un dispositif de récupération configuré pour récupérer la vapeur sous forme de composants évaporés de houblon à partir du dispositif de traitement du houblon ;

un dispositif d'ébullition de jus de matière première configuré pour faire bouillir un jus de matière première ;

un réservoir de séparation tourbillonnant qui soumet le jus après l'ébullition à une séparation solide-liquide ;

un dispositif de refroidissement de jus après le réservoir de séparation tourbillonnant configuré pour refroidir le jus bouilli ;

une ligne de chargement de suspension de houblon configurée pour charger la suspension de houblon après l'ébullition, du dispositif de traitement du houblon vers le jus avant le refroidissement ; et

une ligne de chargement de composants évaporés configurée pour charger les composants évaporés de houblon, du dispositif de récupération vers le jus, après une étape d'ébullition menée par le dispositif d'ébullition de jus de matière première,

dans lequel

le dispositif de traitement du houblon est connecté au dispositif d'ébullition de jus de matière première à travers la ligne de chargement de suspension de houblon

ou

la ligne de chargement de suspension de houblon est connectée au bac tourbillonnaire.

24. Appareil de production de boisson au goût de bière selon la revendication 23,

dans lequel le dispositif de récupération comprend :

un échangeur de chaleur configuré pour refroidir la vapeur afin de générer un condensat ; et

une section de séparation configurée pour éliminer une phase huileuse du condensat tout en récupérant une phase d'eau du condensat sous la forme des composants évaporés de houblon.

# FIG.1

RAW MATERIAL JUICE (WORT OR THE LIKE)

HOP PROCESSING DEVICE 2

\<EXTRACT\>

9

RAW-MATERIAL JUICE BOILING DEVICE 1

WHIRLPOOL (WHIRLING SEPARATION TANK) 3

HEAT EXCHANGER 4

10

12

\<DISTILLATE\>

HEAT EXCHANGER 5-2

AROMA RECOVERY TANK 5-1

5

7

8

11

13

10

EP 3 222 705 B1

## FIG.2

LINALOOL/GERANIOL

FRACTION No.

## FIG.3

4MMP/GERANIOL

FRACTION No.

# FIG.4

MYRCENE/GERANIOL

# FIG.5

# FIG.6

LINALOOL/GERANIOL

# FIG.7

MYRCENE/GERANIOL

# FIG.8

VAPOR

HEAT EXCHANGER — 5-2

SEPARATING SECTION — 5-3  } 5

AROMA RECOVERY TANK — 5-1

# FIG.9

HYDROPHILIC COMPOUNDS

ESSENTIAL OIL OF HOPS

HYDROPHOBIC COMPOUNDS

# FIG.10

# FIG.11

CO₂ EXTRACT

HOP EVAPORATED COMPONENTS

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009077730 A
- JP 2010178628 A
- JP 2010539892 W

- US 3364033 A
- GB 2020693 A

**Non-patent literature cited in the description**

- JOUZOU-BUTU NO SEIBUN. the Brewing Society of Japan, 10 December 1999, 259-261

- **KISHIMOTO, T. ; UEMURA, K. ; AIZAWA, M.** A new insight for controlling the hop flavor using hydrophobicity of yeast cell surface. *34th European Brewery Convention Congress,* 2013